# EUROPEAN PATENT APPLICATION

(11) **EP 4 780 120 A1**
(43) Date of publication of application: **22.07.2026**
(21) Application number: 23951851.7
(22) Date of filing: 14.09.2023
(51) Int. Cl.: H04W 74/08, H04L 5/00, H04W 72/04

(54) **METHOD FOR RETRANSMITTING UPLINK INFORMATION, APPARATUS, AND MEDIUM**

(71) Applicant: Beijing Xiaomi Mobile Software Co., Ltd., Beijing 100085 (CN)
(72) Inventor: LIU, Min, Beijing 100085 (CN); ZHU, Yajun, Beijing 100085 (CN)
(74) Representative: Dehns Germany Partnerschaft mbB
(86) International application number: PCT/CN2023/118892
(87) International publication number: WO 2025/054914

(57) **Abstract**

A method for retransmitting uplink information, an apparatus, and a medium. The method comprises: a terminal receives DCI sent by a network device, wherein the DCI is used for indicating a first number of retransmissions for retransmitting uplink information; and on the basis of the first number of retransmissions, the terminal retransmits the uplink information to the network device by means of a first PUCCH, wherein the first PUCCH comprises: common PUCCHs other than a PUCCH occupied by a Msg4 HARQ-ACK corresponding to Msg4 in a random access procedure, the common PUCCHs having time domain locations before a location where the terminal receives first configuration information, and the first configuration information comprising a dedicated PUCCH resource corresponding to the terminal. The terminal receives the first number of retransmissions indicated by the network device by means of the DCI, so that before receiving a dedicated PUCCH resource configuration, the terminal can retransmit the first PUCCH on the basis of the first number of retransmissions, so as to enhance, by means of the first number of retransmissions, the coverage of uplink information, other than the Msg4 HARQ-ACK, occupying common PUCCH resources.

## Description

### TECHNICAL FIELD

The present disclosure relates to the field of communication technology, and in particular to a method for retransmitting uplink information, an apparatus, and a medium.

### BACKGROUND

In non-terrestrial network (NTN) communication, terminals can obtain radio resources through satellite base stations to extend the coverage of 5G networks. However, uplink enhancement methods for uplink information are still lacking in NTNs or terrestrial networks (TN).

### SUMMARY

For other common physical uplink control channel (common PUCCH) resources involved before the configuration of the dedicated physical uplink control channel (dedicated PUCCH), there is a lack of uplink enhancement methods therefor.

The embodiments of the present disclosure provide a method for retransmitting uplink information, an apparatus, and a medium.

In a first aspect, the embodiments of the present disclosure provide a method for retransmitting uplink information, the method including: receiving, by a terminal, downlink control information (DCI) sent by a network device, where the DCI indicates a first repetition factor for retransmitting the uplink information; and retransmitting, by the terminal, the uplink information to the network device via a first physical uplink control channel (PUCCH) according to the first repetition factor.

The first PUCCH includes: a common PUCCH with a time-domain position prior to a time at which the terminal receives first configuration information, other than the PUCCH occupied by the hybrid automatic repeat request acknowledgement feedback information corresponding to Message 4 (Msg4 HARQ-ACK) during random access, where the first configuration information includes the dedicated PUCCH resource corresponding to the terminal.

In a second aspect, the embodiments of the present disclosure provide a method for retransmitting uplink information, the method including: sending, by a network device, a DCI to a terminal, where the DCI indicates a first repetition factor for retransmitting the uplink information; and receiving, by the network device, the uplink information retransmitted by the terminal via a first PUCCH according to the first repetition factor. The first PUCCH includes: a common PUCCH with a time-domain location prior to the time at which the terminal receives first configuration information, other than the PUCCH occupied by Msg4 HARQ-ACK corresponding to Msg4 during random access, where the first configuration information includes the dedicated PUCCH resource corresponding to the terminal.

In a third aspect, the embodiments of the present disclosure provide a terminal, including: a transceiving module, configured to receive downlink control information (DCI) sent by a network device, where the DCI indicates a first repetition factor for retransmitting uplink information;

The transceiving module is further configured to retransmit the uplink information to the network device via a first physical uplink control channel (PUCCH) according to the first repetition factor.

The first PUCCH includes: a common PUCCH with a time-domain position prior to the time at which the terminal receives first configuration information, other than the PUCCH occupied by hybrid automatic repeat request acknowledgment feedback information corresponding to Message 4 (Msg4 HARQ-ACK) during random access, where the first configuration information includes the dedicated PUCCH resource corresponding to the terminal.

In a fourth aspect, the embodiments of the present disclosure provide a network device, including: a transceiving module, configured to send DCI to a terminal, where the DCI indicates a first repetition factor for retransmitting uplink information. The transceiving module is further configured to receive the uplink information retransmitted by the terminal via a first PUCCH according to the first repetition factor. The first PUCCH includes: a common PUCCH with a time-domain position prior to the time at which the terminal receives first configuration information, other than the PUCCH occupied by Msg4 HARQ-ACK corresponding to Msg4 during random access, where the first configuration information includes the dedicated PUCCH resource corresponding to the terminal.

In a fifth aspect, the embodiments of the present disclosure provide a communication apparatus, including one or more processors. The terminal is configured to perform the method for retransmitting uplink information as described in the first aspect.

In a sixth aspect, the embodiments of the present disclosure provide a communication apparatus, including one or more processors. The communication apparatus is configured to perform the method for retransmitting uplink information as described in the second aspect.

In a seventh aspect, the embodiments of the present disclosure provide a communication system including a terminal and a network device.

The terminal is configured to implement the method for retransmitting uplink information as described in the first aspect.

The network device is configured to implement the method for retransmitting uplink information as described in the second aspect.

In an eighth aspect, the embodiments of the present disclosure provide a storage medium having instructions stored thereon.

When the instructions are executed on a communication apparatus, the communication apparatus is caused to perform the method described in either the first aspect or the second aspect.

In the method of the present disclosure, the terminal receives the first repetition factor indicated by the network device via DCI, so that before receiving the dedicated PUCCH resource configuration, the terminal can retransmit the first PUCCH according to the first repetition factor, thereby enhancing the coverage of the uplink information occupying the common PUCCH resource, other than Msg4 HARQ-ACK, by means of the first repetition factor.

### BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure and do not impose specific limitations on the protection scope of the present disclosure.
Fig. 1 is an example schematic diagram of the architecture of a communication system provided according to an embodiment of the present disclosure;
Fig. 2 is an example interactive schematic diagram of a method provided according to an embodiment of the present disclosure;
Figs. 3a-3c are flowchart illustrations of a method performed by a terminal provided according to an embodiment of the present disclosure;
Figs. 4a-4c are flowchart illustrations of a method performed by a network device provided according to an embodiment of the present disclosure;
Fig. 5a is a structural schematic diagram of a terminal shown according to an embodiment of the present disclosure;
Fig. 5b is a structural schematic diagram of a network device shown according to an embodiment of the present disclosure;
Fig. 6a is a schematic diagram of a communication apparatus shown according to an embodiment of the present disclosure; and
Fig. 6b is a schematic diagram of a communication apparatus shown according to an embodiment of the present disclosure.

### DETAILED DESCRIPTION OF THE EMBODIMENTS

The embodiments of the present disclosure provide a method for retransmitting uplink information, an apparatus, and a medium.

In a first aspect, the embodiments of the present disclosure provide a method for retransmitting uplink information, the method including: receiving, by a terminal, downlink control information (DCI) sent by a network device, where the DCI indicates a first repetition factor for retransmitting the uplink information; and retransmitting, by the terminal, the uplink information to the network device via a first physical uplink control channel (PUCCH) according to the first repetition factor.

The first PUCCH includes: a common PUCCH with a time-domain position prior to a time at which the terminal receives first configuration information, other than the PUCCH occupied by hybrid automatic repeat request acknowledgment feedback information corresponding to Message 4 (Msg4 HARQ-ACK) during random access. The first configuration information includes the dedicated PUCCH resource corresponding to the terminal.

In the above embodiment(s), the terminal receives the first repetition factor indicated by the network device via the DCI, thereby enabling the terminal to retransmit the first PUCCH according to the first repetition factor before receiving the dedicated PUCCH resource configuration. Thus, the coverage of the uplink information occupying the common PUCCH resource, other than Msg4 HARQ-ACK, is enhanced by means of the first repetition factor.

In conjunction with some embodiments of the first aspect, in some implementations, the DCI is a DCI used for scheduling the Msg4.

Or, the DCI is a DCI used for scheduling the physical downlink shared channel (PDSCH) corresponding to the first PUCCH.

In the above embodiment(s), the DCI used for indicating the first repetition factor may be a DCI for multiplexing and scheduling the Msg4, or a DCI for scheduling the PDSCH corresponding to the first PUCCH, so that the terminal knows the first repetition factor based on the DCI issued by the network device.

In conjunction with some embodiments of the first aspect, in some implementations, the first repetition factor is the same as or different from the second repetition factor, and the second repetition factor is the repetition factor of Msg4 HARQ-ACK.

In the above embodiment(s), the first repetition factor corresponding to the first PUCCH and the second repetition factor corresponding to Msg4 HARQ-ACK may be the same or different. That is, the first repetition factor may be decoupled from the repetition factor of Msg4 HARQ-ACK, allowing the first PUCCH to be retransmitted with a different repetition factor. Alternatively, the first PUCCH may be retransmitted with the same repetition factor as Msg4 HARQ-ACK, facilitating the flexibility in indication or configuration by the network device.

In conjunction with some embodiments of the first aspect, in some implementations, the DCI includes a downlink assignment index (DAI) information field, which is used to indicate the first repetition factor.

In the above embodiment(s), by reusing the reserved DAI field in the DCI to indicate the first repetition factor, signaling resources can be effectively utilized and saved.

In conjunction with some embodiments of the first aspect, in some implementations, the first repetition factor is one of multiple candidate repetition factors.

In the above embodiment(s), the first repetition factor indicated by the DCI may be one of multiple known candidate repetition factors, allowing the network device to indicate an appropriate repetition factor within a selectable range.

In conjunction with some embodiments of the first aspect, in some implementations, some or all of the multiple candidate repetition factors are defined by a protocol.

In the above embodiment(s), some or all of the candidate repetition factors may be defined by a protocol definition, and the network device indicates the first repetition factor via DCI based on the protocol-defined candidate repetition factor(s).

In conjunction with some embodiments of the first aspect, in some implementations, the method further includes: receiving, by the terminal, second configuration information sent by the network device, where the second configuration information includes multiple candidate repetition factors. For example, the second configuration information includes some or all of the aforementioned multiple candidate repetition factors.

In the above embodiment(s), the network device can configure some of the candidate repetition factors and indicate the first repetition factor within these configured candidate repetition factors via DCI. Alternatively, the network device can configure some of the candidate repetition factors and, in conjunction with some of the candidate repetition factors defined by the protocol, indicate the first repetition factor. Further alternatively, the network device can indicate the first repetition factor based on all the configured candidate repetition factors, offering high configuration flexibility.

In conjunction with some embodiments of the first aspect, in some implementations, the second configuration information is sent via the Radio Resource Control (RRC) message.

In the above embodiment(s), the terminal can receive the second configuration information sent by the network device via the RRC message to obtain the candidate repetition factors, facilitating the determination of the first repetition factor among them based on the DCI.

In conjunction with some embodiments of the first aspect, in some implementations, the method further includes: sending, by the terminal, capability information to the network device, where the capability information indicates whether the terminal supports the capability to retransmit uplink information via the first PUCCH, and/or whether the terminal supports the capability to retransmit Msg4 HARQ-ACK.

In the above embodiment(s), the terminal reports capability information to the network device to indicate whether it supports the first capability and/or the second capability, facilitating reasonable operation or configuration by the network device based on the terminal's capabilities.

In a second aspect, the embodiments of the present disclosure provide a method for retransmitting uplink information, the method including: sending, by the network device, DCI to the terminal, where the DCI indicates a first repetition factor for retransmitting uplink information; and receiving, by the network device, the uplink information retransmitted by the terminal via a first PUCCH according to the first repetition factor. The first PUCCH includes: a common PUCCH with a time-domain position prior to the time at which the terminal receives first configuration information, other than the PUCCH occupied by Msg4 HARQ-ACK corresponding to Msg4 during random access, where the first configuration information includes the dedicated PUCCH resource corresponding to the terminal.

In the above embodiment(s), the network device indicates the first repetition factor to the terminal by issuing DCI, thereby enabling the terminal to retransmit the first PUCCH according to the first repetition factor before receiving the dedicated PUCCH resource configuration, thus enhancing the coverage of the information occupying the common PUCCH resource, other than Msg4 HARQ-ACK, by means of the first repetition factor.

In conjunction with some embodiments of the second aspect, in some implementations, the DCI is a DCI used for scheduling Msg4.

Or, the DCI is a DCI used for scheduling the PDSCH corresponding to the first PUCCH.

In conjunction with some embodiments of the second aspect, in some implementations, the first repetition factor is the same as or different from the second repetition factor, and the second repetition factor is the repetition factor of Msg4 HARQ-ACK.

In conjunction with some embodiments of the second aspect, in some implementations, the DCI includes a DAI information field, which is used to indicate the first repetition factor.

In conjunction with some embodiments of the second aspect, in some implementations, the first repetition factor is one of a plurality of candidate repetition factors.

In conjunction with some embodiments of the second aspect, in some implementations, some or all of the plurality of candidate repetition factors are defined by a protocol.

In conjunction with some embodiments of the second aspect, in some implementations, the method further includes: sending, by the network device, second configuration information to the terminal, where the second configuration information includes a plurality of candidate repetition factors. For example, the second configuration information includes some or all of the plurality of candidate repetition factors in the foregoing embodiment(s).

In conjunction with some embodiments of the second aspect, in some implementations, the second configuration information is sent via the Radio Resource Control (RRC) message.

In conjunction with some embodiments of the second aspect, in some implementations, the method further includes: receiving, by the network device, capability information sent by the terminal, where the capability information indicates whether the terminal supports the capability to retransmit information via the first PUCCH, and/or whether the terminal supports the capability to retransmit Msg4 HARQ-ACK.

In a third aspect, the embodiments of the present disclosure provide a terminal, including: a transceiving module, configured to receive downlink control information (DCI) sent by the network device, where the DCI indicates a first repetition factor for retransmitting uplink information.

The transceiving module is further configured to retransmit the uplink information to the network device via a first physical uplink control channel (PUCCH) according to the first repetition factor.

The first PUCCH includes: a common PUCCH with a time-domain position prior to the time at which the terminal receives first configuration information, other than the PUCCH occupied by hybrid automatic repeat request acknowledgment feedback information corresponding to Message 4 (Msg4 HARQ-ACK) during random access, where the first configuration information includes the dedicated PUCCH resource corresponding to the terminal.

In a fourth aspect, the embodiments of the present disclosure provide a network device, including: a transceiving module, configured to send DCI to the terminal, where the DCI indicates a first repetition factor for retransmitting uplink information.

The transceiving module is further configured to receive the uplink information retransmitted by the terminal via a first PUCCH according to the first repetition factor. The first PUCCH includes: a common PUCCH with the time-domain position prior to the time at which the terminal receives first configuration information, other than the PUCCH occupied by Msg4 HARQ-ACK corresponding to Msg4 during random access, where the first configuration information includes the dedicated PUCCH resource corresponding to the terminal.

In a fifth aspect, the embodiments of the present disclosure provide a communication apparatus, including: one or more processors.

The communication apparatus is configured to perform the method for retransmitting uplink information as described in the first aspect.

In a sixth aspect, an embodiment of the present disclosure provides a communication apparatus, including: one or more processors.

The communication apparatus is configured to perform the method for retransmitting uplink information as described in the second aspect.

In a seventh aspect, the embodiments of the present disclosure provide a communication system, including a terminal and a network device.

The terminal is configured to implement the method for retransmitting uplink information as described in the first aspect.

The network device is configured to implement the method for retransmitting uplink information as described in the second aspect.

In an eighth aspect, the embodiments of the present disclosure provide a storage medium having instructions stored thereon.

When the instructions are executed on a communication apparatus, the communication apparatus is caused to perform the method as described in any embodiment of the first aspect or any embodiment of the second aspect.

In a ninth aspect, the embodiments of the present disclosure provide a program product. When the program product is executed by a communication apparatus, the communication apparatus is caused to perform the method described in the example implementations of the first and second aspects.

In a tenth aspect, the embodiments of the present disclosure provide a computer program. When the computer program is executed on a computer, the computer is caused to perform the method described in the example implementations of the first and second aspects.

In an eleventh aspect, the embodiments of the present disclosure provide a chip or chip system. The chip or chip system includes processing circuit configured to perform the method described in the example implementations of the first and second aspects above.

It may be understood that the aforementioned terminals, network devices, communication systems, storage media, program products, computer programs, chips, or chip systems are all used to perform the methods proposed in the embodiments of the present disclosure. Therefore, the beneficial effects they can achieve may be referred to the beneficial effects in the corresponding methods, and will not be repeated here.

The embodiments of the present disclosure provide a method for retransmitting uplink information, an apparatus, and a medium.

The embodiments of the present disclosure are not exhaustive, but merely illustrative of some embodiments, and are not intended to impose specific limitations on the scope of protection of the present disclosure. Unless contradictory, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily interchanged. Furthermore, the example implementations in a certain embodiment may be arbitrarily combined. In addition, the embodiments may be arbitrarily combined. For example, some or all steps of different embodiments may be arbitrarily combined, and a certain embodiment may be arbitrarily combined with the example implementations of other embodiments.

In various embodiments of the present disclosure, unless otherwise specified or logically conflicting, the terminology and/or descriptions between the embodiments are consistent and may be referenced interchangeably. Technical features in different embodiments may be combined to form new embodiments based on their inherent logical relationships.

The terminology used in the embodiments of the present disclosure is for the purpose of describing specific embodiments only and is not intended to limit the present disclosure.

In the embodiments of the present disclosure, unless otherwise stated, elements expressed in the singular form, such as "a", "an", "that", "the", "said" "foregoing", "this" etc., may mean "one and only one" , "one or more", "at least one", etc. For example, when using articles such as "a", "an", "the", etc., in translation, the noun following these articles may be understood as either a singular or a plural expression.

In the embodiments of the present disclosure, "multiple" refers to two or more.

In some embodiments, terms such as "at least one of", "one or more", "a plurality", "multiple", etc. may be used interchangeably.

In some embodiments, the notation "at least one of A or B", "A and/or B", "A in one case, B in another case", "in response to one case A, in response to another case B", etc., may include the following technical solutions depending on the situations: in some embodiments, A (executing A regardless of B); in some embodiments, B (executing B regardless of A); in some embodiments, execution is selected from A and B (A and B are selectively executed); in some embodiments, both A and B are executed. The same applies when there are more branches such as A, B, C, etc.

In some embodiments, the notation "A or B" etc., may include the following technical solutions depending on the situations: in some embodiments, A (executing A regardless of B); in some embodiments, B (executing B regardless of A); in some embodiments, execution is selected from A and B (A and B are selectively executed). The same applies when there are more branches such as A, B, C, etc.

The prefixes "first", "second", etc., in the embodiments of the present disclosure are merely for distinguishing different described objects and do not restrict the position, order, priority, number, or content of the described objects. The description of the described objects should be found in the claims or the context of the embodiments, and the use of prefixes should not constitute unnecessary restrictions. For example, if the described object is a "field", the ordinal numbers before "field" in "first field" and "second field" do not restrict the position or order of the "field". The ordinal numbers "first" and "second" neither restrict whether the "fields" they modify are in the same message, nor restrict the order of "first field" and "second field". Similarly, if the described object is a "level", the ordinal numbers before "level" in "first level" and "second level" do not restrict the priority between these "levels". For example, the number of the described objects is not limited by ordinal numbers, and there may be one or more. For instance, in "first device", the number of "devices" may be one or more. Furthermore, objects modified by different prefixes may be the same or different. For example, if the object is described as "device", then "first device" and "second device" may be the same device or different devices, and their types may be the same or different. Similarly, if the object is described as "information", then "first information" and "second information" may be the same information or different information, and their contents may be the same or different.

In some embodiments, "including A", "containing A", "for indicating A", and "carrying A" may be interpreted as directly carrying A or indirectly indicating A.

In some embodiments, terms such as "time/frequency" and "time-frequency domain" refer to time domain and/or frequency domain.

In some embodiments, terms such as "in response to", "in response to determining", "in the case of", "when", "while", "if", "in the event of", etc., may be used interchangeably.

In some embodiments, terms such as "greater than", "greater than or equal to", "not less than", "more than", "more than or equal to", "not less than", "higher than", "higher than or equal to", "not lower than", "above", etc., may be used interchangeably. Terms such as "smaller than", "smaller than or equal to", "not greater than", "less than", "less than or equal to", "not more than", "lower than", "lower than or equal to", "not higher than", "below", etc., may be used interchangeably.

In some embodiments, apparatus and devices may be interpreted as physical or virtual, and their names are not limited to those described in the embodiments. In some cases, they may also be understood as "equipment", "device", "circuit", "network element", "node", "function", "unit", "section", "system", "network", "chip", "chip system", "entity", "body", etc.

In some embodiments, "network" may be interpreted as the devices included in the network, such as access network devices, core network devices, etc. In some embodiments, the terms such as "access network device (AN device)", "radio access network device (RAN device)", "base station (BS)", "radio base station", "fixed station", "node", "access point", "transmission point (TP)", "reception point (RP)", "transmission and/or reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", and etc. may be used interchangeably.

In some embodiments, access network device, core network device, or network device may be replaced by "terminal." For example, embodiments of the present disclosure may also be applied to structures where communication between access network devices, core network devices, or network devices and terminals is replaced by communication between multiple terminals (e.g., device-to-device (D2D), vehicle-to-everything (V2X), etc.). In this case, the terminal may also be configured in structure to have all or some of the functions of the access network device. Furthermore, the terms such as "uplink" and "downlink" may be replaced by the terms corresponding to inter-terminal communication (e.g., "side"). For example, uplink channel, downlink channel, etc., may be replaced by side channel, and uplink link, downlink link, etc., may be replaced by side link.

In some embodiments, the terminal may be replaced by an access network device, core network device, or network device. In this case, the access network device, core network device, or network device may also be configured in structure to have all or some of the functions of the terminal.

In some embodiments, the acquisition of data, information, etc., may comply with the laws and regulations of the country where the user is located.

In some embodiments, data, information, etc., may be acquired after obtaining the user's consent.

Furthermore, each element, row, or column in the tables of the embodiments of the present disclosure may be implemented as an independent embodiment, and any combination of elements, rows, and columns may also be implemented as an independent embodiment.

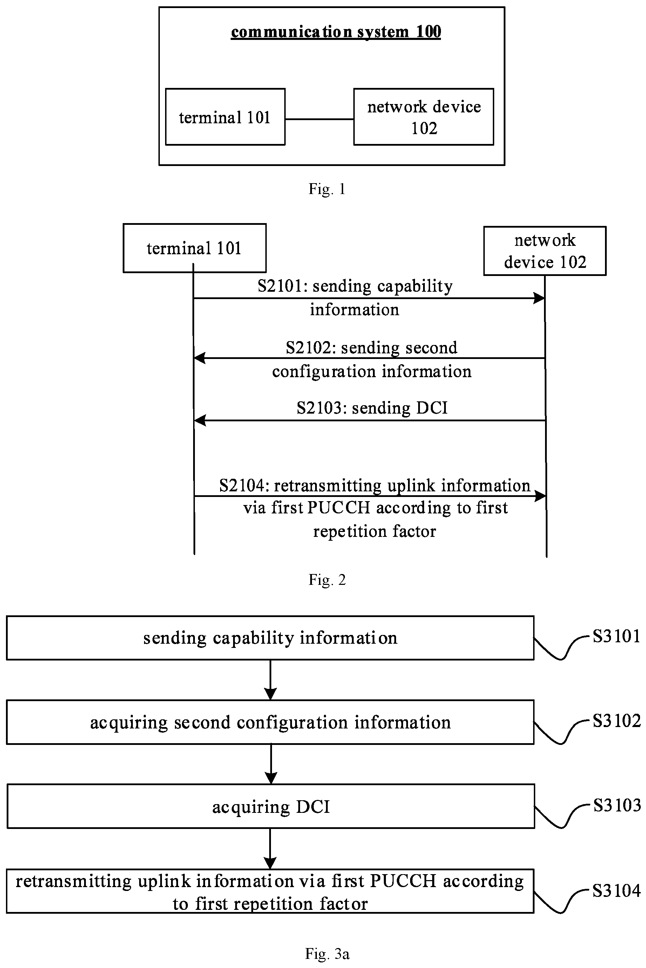

Fig. 1 is a schematic diagram of the architecture of a communication system illustrated according to an embodiment of the present disclosure.

As shown in Fig. 1, the communication system 100 includes a terminal 101 and a network device 102.

In some embodiments, the terminal 101 includes, for example, at least one of the following: a mobile phone, a wearable device, an Internet of Things (IoT) device, a car with communication capabilities, a smart car, a Pad, a computer with wireless transceiving capabilities, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device and a core network device.

In some embodiments, the access network device is, for example, a node or device that connects a terminal to a wireless network. The access network device may include, but is not limited to, at least one of the following: evolved Node B (eNB) in a 5G communication system, next-generation eNB (ng-eNB), next-generation NodeB (gNB), node B (NB), home node B (HNB), home evolved nodeB (HeNB), radio backhaul device, radio network controller (RNC), base station controller (BSC), base transceiver station (BTS), base band unit (BBU), mobile switching center, base station in a 6G communication system, Open RAN, Cloud RAN, base station in other communication systems, and access node in a wireless fidelity (WiFi) system.

For example, in a communication system applicable to NTN, the network device 102 may include non-terrestrial base stations such as satellite base stations (or satellites) or drones, as well as terrestrial base stations such as ground stations or gateway stations. For example, the terrestrial base station may be used to connect the satellite base station and the core network device. For example, the terminal 101 may receive radio resources from satellite base stations in different orbits.

In some embodiments, the technical solutions of the present disclosure are applicable to Open RAN architecture. In this case, the interfaces between or within access network devices involved in the embodiments of the present disclosure may be transformed into internal interfaces of Open RAN. The processes and information interactions between these internal interfaces may be implemented through software or programs.

In some embodiments, the access network device may be composed of a central unit (CU) and a distributed unit (DU). The CU may also be called a control unit. Using a CU-DU structure can separate the protocol layers of the access network device. Some protocol layer functions are centrally controlled by the CU, while the remaining part or all the protocol layer functions are distributed in the DU, which is centrally controlled by the CU. However, this is not a limitation.

In some embodiments, the core network device may be a single device including one or more network elements, or may be multiple devices or a group of devices, each including all or some of one or more network elements. The network element may be virtual or physical. The core network may include, for example, at least one of Evolved Packet Core (EPC), 5G Core Network (5GCN), or Next Generation Core (NGC).

It may be understood that the communication system described in the embodiments of the present disclosure is for the purpose of more clearly illustrating the technical solutions in the embodiments of the present disclosure and does not constitute any limitation on the technical solutions provided in the embodiments of the present disclosure. Those skilled in the art shall recognize that the technical solutions provided in the embodiments of the present disclosure are equally applicable to similar technical problems as system architectures evolve and new service scenarios emerge.

The following embodiments of the present disclosure may be applied to the communication system 100 shown in Fig. 1, or to some of its main components, but are not limited thereto. The entities shown in Fig. 1 are illustrative. The communication system may include all or some of the entities in Fig. 1, or other entities not shown in Fig. 1. The number and form of each entity are arbitrary. The connection relationships between the entities are illustrative, entities may be unconnected or connected, and the connection may be arbitrary, which may be direct or indirect connection, wired or wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM, registered trademark), CDMA2000, Ultra Mobile Broadband (UMB), IEEE 802.11 (Wi-Fi, registered trademark), IEEE 802.16 (WiMAX, registered trademark), IEEE 802.20, Ultra-Wideband (UWB), Bluetooth (registered trademark), Public Land Mobile Network (PLMN), Device-to-Device (D2D) systems, Machine-to-Machine (M2M) systems, Internet of Things (IoT) systems, Vehicle-to-Everything (V2X) systems, systems utilizing other communication methods, and next-generation systems built upon them, etc. Furthermore, multiple systems may be combined (e.g., a combination of LTE or LTE-A with 5G).

In NTN, uplink enhancements can be performed on HARQ-ACK for Message 4 (Msg4) reported using the common PUCCH, such as enhancing coverage by means of repetition.

Fig. 2 is an interactive schematic diagram illustrating a method for retransmitting uplink information shown according to an embodiment of the present disclosure. As shown in Fig. 2, the embodiments of the present disclosure relate to a method for retransmitting uplink information, which includes steps S2101, S2102, S2103, and S2104.

**Step S2101:** the terminal 101 sends capability information to the network device 102.

In some embodiments, the capability information is used to indicate whether the terminal 101 supports the capability to retransmit uplink information via the first PUCCH, and/or whether the terminal supports the capability to retransmit Msg4 HARQ-ACK.

For example, when the terminal 101 supports the capability to retransmit uplink information via the first PUCCH (referred to as supporting the first capability), it can support retransmitting uplink information via the first PUCCH, or as described in some embodiments, simply referred to as retransmitting the first PUCCH.

For example, when the terminal 101 supports the capability to retransmit Msg4 HARQ-ACK (referred to as supporting the second capability), it can support retransmission of Msg4 HARQ-ACK.

For example, the first capability and the second capability may be indicated by the same capability information or by different capability information.

For example, when indicating whether the first and second capabilities are supported by the same capability information, 2 bits of the capability information may be used, with each bit indicating whether the corresponding capability is supported. For example, a value of 01 for these 2 bits indicates that the terminal 101 does not support the first capability but supports the second capability; a value of 10 for these 2 bits indicates that the terminal 101 supports the first capability but does not support the second capability; a value of 11 for these 2 bits indicates that the terminal 101 supports both the first and second capabilities; and a value of 00 for these 2 bits indicates that the terminal 101 does not support either the first or the second capability.

In some embodiments, the first PUCCH includes: a common PUCCH with a time-domain position prior to the time at which the terminal 101 receives the first configuration information, other than the PUCCH occupied by Msg4 HARQ-ACK corresponding to Msg4 during random access. The first configuration information includes the dedicated PUCCH resource corresponding to the terminal 101.

For example, during random access, the terminal 101 may send Msg1 and Msg3 to the network device 102 and receive Msg2 and Msg4 sent by the network device 102.

For example, when the terminal 101 receives Msg4 sent by the network device 102 via PDSCH, it sends a corresponding Msg4 HARQ-ACK to the network device 102, so that the network device 102 can perform the dedicated PUCCH configuration on the terminal 101 after receiving Msg4 HARQ-ACK.

For example, the uplink information transmitted via the first PUCCH may include: information, other than Msg4 HARQ-ACK, transmitted via the common PUCCH after the terminal 101 sends Msg4 HARQ-ACK and before receiving the first configuration information, such as HARQ-ACK corresponding to other information.

In some embodiments, the network device 102 receives the aforementioned capability information.

For example, the network device 102 may be a base station in a terrestrial network (TN), or a satellite base station or terrestrial base station in NTN.

**Step S2102:** the network device 102 sends the second configuration information to the terminal 101.

In some embodiments, the second configuration information includes multiple candidate repetition factors.

For example, the second configuration information may include some or all of the multiple candidate repetition factors.

For example, if the multiple candidate repetition factors are {1, 2, 4, 8}, the second configuration information may configure all of the above candidate repetition factors, or only configure some candidate repetition factors such as {2, 8}.

In some embodiments, some or all of the multiple candidate repetition factors may be defined by a protocol.

For example, step S2102 may be omitted when all the multiple candidate repetition factors are defined by the protocol.

For example, the protocol-defined method may be used in conjunction with the configuration method. For example, the protocol defines some candidate repetition factors, and the network device 102 configures the remaining candidate repetition factors through the second configuration information.

In some embodiments, the second configuration information is sent via an RRC message.

For example, the network device 102 sends the second configuration information by sending a system information block (SIB) to the terminal 101.

**Step S2103:** the network device 102 sends DCI to the terminal 101.

In some embodiments, the DCI is used to indicate the first repetition factor for retransmitting the uplink information.

For example, the uplink information refers to information transmitted via the first PUCCH.

In some embodiments, the multiple candidate repetition factors include the first repetition factor.

For example, in conjunction with the example implementation of step S2102, after configuring some or all of the candidate repetition factors, the network device 102 may indicate the first repetition factor among them via DCI based on the configuration and/or protocol definition.

For example, multiple candidate repetition factors are {1, 2, 4, 8}, and the first repetition factor is 8.

For example, when configuring all the multiple candidate repetition factors via the second configuration information, the network device 102 may indicate DCI according to the configuration.

For example, when configuring some candidate repetition factors via the second configuration information, the network device 102 may indicate DCI according to the configuration, or according to the candidate repetition factor(s) based on the configuration and protocol definition.

In some embodiments, the DCI is a DCI used for scheduling Msg4.

In this embodiment, the DCI includes a DAI information field, which is used to indicate the first repetition factor.

For example, the DAI information field may occupy 2 reserved bits in the DCI.

In an example, the protocol defines four candidate repetition factors {1, 2, 4, 8}. Different values of the two bits in the DAI field correspond to different candidate repetition factors. For example, a value of 00 for the two bits corresponds to candidate repetition factor 1; a value of 01 for the two bits corresponds to candidate repetition factor 2; a value of 10 for the two bits corresponds to candidate repetition factor 4; and a value of 11 for the two bits corresponds to candidate repetition factor 8.

In another example, two candidate repetition factors {1, 8} are defined by the protocol and configured by the network device 102. Different values of the two bits in the DAI field correspond to different candidate repetition factors. For example, a value of 00 for the two bits corresponds to candidate repetition factor 1; and a value of 01 for the two bits corresponds to candidate repetition factor 8. Alternatively, a single bit in the DAI field may indicate different candidate repetition factors. For example, a bit from the Most significant bit (MSB) or the Most significant bit (LSB) may be selected for indication. When this single bit is 0, the corresponding candidate repetition factor is 1; when this single bit is 1, the corresponding candidate repetition factor is 8.

For example, in the DCI used to schedule Msg4, the DAI information field may indicate the second repetition factor, i.e., the repetition factor of Msg4 HARQ-ACK, and/or indicate the first repetition factor.

In this embodiment, the first repetition factor may be the same as or different from the second repetition factor, and the second repetition factor is the repetition factor of Msg4 HARQ-ACK.

In an example, the network device 102 configures a repetition factor, which may be applied to Msg4 HARQ-ACK, i.e., the second repetition factor is the configured repetition factor. The repetition factor indicated by the DAI of the DCI used by the network device 102 for scheduling Msg4 is then used as the first repetition factor. In this example, the first repetition factor and the second repetition factor may be different, or in other words, the repetition factor corresponding to the first PUCCH may be indicated independently, without being bound to the retransmission or repetition factor of Msg4 HARQ-ACK.

In another example, the network device 102 is configured with multiple repetition factors. For example, if two repetition factors are configured, and one repetition factor is indicated by DAI of DCI, then the repetition factor indicated by DAI applies to both Msg4 HARQ-ACK and the first PUCCH. That is, both the first and second repetition factors are the repetition factor indicated by the DAI. In this example, the first and second repetition factors are the same, or in other words, the repetition factor of Msg4 HARQ-ACK is reused as the repetition factor corresponding to the first PUCCH.

In some embodiments, the DCI is a DCI used to schedule the PDSCH corresponding to the first PUCCH.

In this embodiment, the DCI includes a DAI information field, which is used to indicate the first repetition factor.

For example, the DAI information field may occupy 2 reserved bits in the DCI. The repetition factor indicated by these two bits may be found in the description of the above embodiment(s), and will not be repeated here.

In this embodiment, the DAI of the DCI scheduling the PDSCH is used to indicate the first repetition factor. The first repetition factor may be the same as or different from the second repetition factor.

For example, the second repetition factor may be determined according to the configuration of the network device 102, as described in the foregoing example(s). Alternatively, the second repetition factor may be indicated by the DAI of the DCI scheduling Msg4. In this embodiment, the first and second repetition factors may be indicated by different DCIs, i.e., the first repetition factor may be indicated separately, so that the retransmission corresponding to the first PUCCH is further decoupled from the retransmission of Msg4 HARQ-ACK.

In some embodiments, the terminal 101 receives the above-mentioned DCI.

**Step S2104:** the terminal 101 retransmits uplink information to the network device 102 via the first PUCCH according to the first repetition factor.

In some embodiments, the number of times the terminal 101 retransmits uplink information via the first PUCCH (or simply described as retransmitting the first PUCCH) is the first repetition factor. When the repetition factor reaches the first repetition factor, the terminal 101 stops retransmitting.

In some embodiments, the names of information, etc., are not limited to the names described in the embodiments. The terms such as "information", "message", "signal", "signaling", "report", "configuration", "indication", "instruction", "command" , "channel", "parameter", "domain", "field", etc. may be used interchangeably.

In some embodiments, "acquire", "get", "obtain", "receive", "transmit", "bidirectional transmission", and "send and/or receive" may be used interchangeably, and may be interpreted as receiving from other entities, obtaining from protocols, obtaining from higher layers, obtaining through self-processing, autonomous implementation, etc.

In some embodiments, the terms such as "send", "transmit", "report", "distribute", "transmit", "bidirectional transmission" , "send and/or receive", etc. may be used interchangeably.

In some embodiments, the terms such as "radio", "wireless", "radio access network (RAN)", "access network (AN)", "RAN-based", etc. may be used interchangeably.

In some embodiments, the terms such as "time moment", "time point", "time", "time-domain position", etc. may be used interchangeably, and the terms such as "duration", "segment", "time window", "window", "time", etc. may be used interchangeably.

In some embodiments, the terms such as "component carrier (CC)", "cell", "frequency carrier", "carrier frequency", etc. may be used interchangeably.

In some embodiments, the terms such as "certain", "preset", "default", "set", "indicated", "certain", "any", "first", etc. may be used interchangeably. "Certain A", "preset A", "default A", "set A", "indicated A", "specific A", "any A", "first A", etc. may be interpreted as A pre-defined in a protocol, etc., or A obtained through setting, configuration, or indication, etc., or interpreted as a specific A, a certain A, any A, first A, etc., but are not limited thereto.

In some embodiments, determination or judgment may be performed by using a value represented by 1 bit (0 or 1), or by a true/false value (Boolean value) represented by true or false, or by numerical comparison (e.g., comparison with a predetermined value), but are not limited thereto.

In some embodiments, "not expecting reception" may be interpreted as not receiving on the time-domain and/or frequency-domain resource, or interpreted as not performing subsequent processing on data, etc., after receiving data, etc.; "not expecting transmission" may be interpreted as not transmitting, or interpreted as transmitting but not expecting a response from the receiver.

The method involved in the embodiments of the present disclosure may include at least one of steps S2101 to S2104. For example, steps S2103 to S2104 may be implemented as an independent embodiment, steps S2102 to S2104 may be implemented as an independent embodiment, and steps S2101 and S2103 to S2104 may be implemented as an independent embodiment, but are not limited thereto.

In some embodiments, at least one of steps S2101 and S2102 is optional, and one or more steps of these steps may be omitted or substituted in different embodiments. For example, step S2102 may be omitted when configuring the candidate repetition factor through a protocol.

In some embodiments, other example implementations described before or after the specification corresponding to Fig. 2 may be referred to.

Fig. 3a is a flowchart illustrating a method for retransmitting uplink information shown according to an embodiment of the present disclosure. As shown in Fig. 3a, the embodiment of the present disclosure relates to a method for retransmitting uplink information, which is performed by the terminal 101. The method includes steps S3101, S3102, S3103, and S3104.

**Step S3101:** sending capability information.

For example, alternative implementations of step S3101 may refer to step S2101 in Fig. 2 and other related parts of the embodiments involved in Fig. 2, and will not be repeated here.

In some embodiments, the terminal 101 may send capability information to the network device 102, but is not limited thereto. It may also send capability information to other entities.

**Step S3102:** acquiring second configuration information.

For example, alternative implementations of step S3102 may refer to step S2102 in Fig. 2 and other related parts of the embodiments involved in Fig. 2, and will not be repeated here.

In some embodiments, the terminal 101 may acquire second configuration information from the network device 102, but is not limited thereto. It may also acquire second configuration information from other entities.

**Step S3103:** acquiring DCI.

For example, alternative implementations of step S3103 may refer to step S2103 in Fig. 2 and other related parts of the embodiments involved in Fig. 2, and will not be repeated here.

In some embodiments, the terminal 101 may acquire DCI from the network device 102, but is not limited thereto. It may also acquire DCI from other entities.

**Step S3104:** retransmitting the uplink information via the first PUCCH according to the first repetition factor.

For example, example implementations of step S3104 may refer to step S2104 in Fig. 2 and other related parts of the embodiments involved in Fig. 2, which will not be repeated here.

In some embodiments, the terminal 101 may retransmit the uplink information to the network device 102, but is not limited thereto. It may also retransmit the uplink information to other entities.

The method involved in the embodiments of the present disclosure may include at least one of steps S3101 to S3104. For example, steps S3103 to S3104 may be implemented as an independent embodiment, steps S3102 to S3104 may be implemented as an independent embodiment, and steps S3101 and S3103 to S3104 may be implemented as an independent embodiment, but are not limited thereto.

In some embodiments, at least one of steps S3101 and S3102 is optional, and one or more steps of these steps may be omitted or substituted in different embodiments.

In some embodiments, other example implementations described before or after the specification corresponding to Fig. 3a may be referred to.

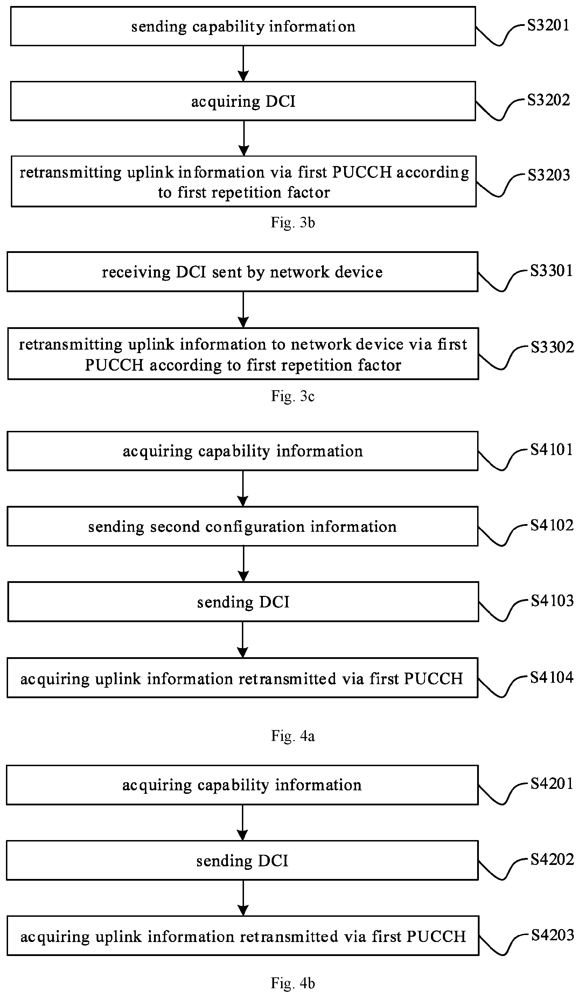

Fig. 3b is a flowchart illustrating a method for retransmitting uplink information shown according to an embodiment of the present disclosure. As shown in Fig. 3b, the embodiment of the present disclosure relates to a method for retransmitting uplink information, which is performed by the terminal 101. The method includes steps S3201, S3202, and S3203.

**Step S3201:** sending capability information.

For example, example implementations of step S3201 may refer to step S2101 in Fig. 2, step S3101 in Fig. 3a, and other related parts of the embodiments involved in Fig. 2 and Fig. 3a, which will not be repeated here.

**Step S3202:** acquiring DCI.

For example, example implementations of step S3202 may refer to step S2103 in Fig. 2, step S3103 in Fig. 3a, and other related parts of the embodiments involved in Fig. 2 and Fig. 3a, which will not be repeated here.

**Step** S3203: retransmitting uplink information through the first PUCCH according to the first repetition factor.

For example, example implementations of step S3203 may refer to step S2104 in Fig. 2, step S3104 in Fig. 3a, and other related parts of the embodiments involved in Figs. 2 and 3a, which will not be repeated here.

In some embodiments, other example implementations described before or after the specification corresponding to Fig. 3b may be referred to.

Fig. 3c is a flowchart illustrating a method for retransmitting uplink information shown according to an embodiment of the present disclosure. As shown in Fig. 3c, an embodiment of the present disclosure relates to a method for retransmitting uplink information, which is performed by the terminal 101. The method includes steps S3301 and S3302.

**Step S3301:** receiving DCI sent by the network device 102.

For example, example implementations of step S3301 may refer to step S2103 in Fig. 2, step S3103 in Fig. 3a, and other related parts of the embodiments involved in Figs. 2 and 3a, which will not be repeated here.

In some embodiments, the DCI is used to indicate the first repetition factor for retransmitting uplink information.

In some embodiments, the DCI is a DCI used for scheduling Msg4, or a DCI used for scheduling the Physical Downlink Shared Channel (PDSCH) corresponding to the first PUCCH.

For example, the first repetition factor may be the same as or different from the second repetition factor, and the second repetition factor is the repetition factor of Msg4 HARQ-ACK.

In some embodiments, the DCI includes a Downlink Assignment Index (DAI) information field, which indicates the first repetition factor.

In some embodiments, the first repetition factor is one of a plurality of candidate repetition factors.

For example, some or all of the plurality of candidate repetition factors are defined by the protocol.

For example, the method may further include: receiving, by the terminal, second configuration information sent by the network device, where the second configuration information includes a plurality of candidate repetition factors.

For example, the second configuration information is sent via a Radio Resource Control (RRC) message.

For example, prior to step S3301, the method may further include: sending, by the terminal, capability information to the network device, where the capability information indicates whether the terminal supports the capability to retransmit information via the first PUCCH, and/or whether the terminal supports the capability to retransmit Msg4 HARQ-ACK.

**Step S3302:** the terminal 101 retransmits uplink information to the network device 102 via the first PUCCH according to the first repetition factor.

For example, example implementations of step S3302 may refer to step S2104 in Fig. 2, step S3104 in Fig. 3a, and other related parts of the embodiments involved in Figs. 2 and 3a, which will not be repeated here.

In some embodiments, the first PUCCH includes: a common PUCCH with the time-domain position prior to the time at which the terminal receives the first configuration information, other than the PUCCH occupied by Msg4 HARQ-ACK corresponding to Msg4 during random access. The first configuration information includes the dedicated PUCCH resource corresponding to the terminal.

In some embodiments, other example implementations described before or after the specification corresponding to Fig. 3c may be referred to.

Fig. 4a is a flowchart illustrating a method for retransmitting uplink information shown according to an embodiment of the present disclosure. As shown in Fig. 4a, an embodiment of the present disclosure relates to a method for retransmitting uplink information, which is performed by the network device 102. The method includes steps S4101, S4102, S4103, and S4104.

**Step S4101:** acquiring capability information.

For example, example implementations of step S4101 may refer to step S2101 in Fig. 2 and other related parts of the embodiments involved in Fig. 2, which will not be repeated here.

In some embodiments, the network device 102 may acquire capability information from the terminal 101, but is not limited to this. It may also acquire capability information from other entities.

**Step S4102:** sending second configuration information.

For example, example implementations of step S4102 may refer to step S2102 in Fig. 2 and other related parts of the embodiments involved in Fig. 2, and will not be repeated here.

In some embodiments, the network device 102 may send second configuration information to the terminal 101, but is not limited to this. It may also send second configuration information to other entities.

**Step S4103:** sending DCI.

For example, example implementations of step S4103 may refer to step S2103 in Fig. 2 and other related parts of the embodiments involved in Fig. 2, and will not be repeated here.

In some embodiments, the network device 102 may send DCI to the terminal 101, but is not limited to this. It may also send DCI to other entities.

**Step S4104:** the network device 102 acquires uplink information retransmitted via the first PUCCH.

For example, example implementations of step S4104 may refer to step S2104 in Fig. 2 and other related parts of the embodiments involved in Fig. 2, which will not be repeated here.

In some embodiments, the network device 102 may receive the retransmitted uplink information from the terminal 101, but is not limited thereto. It may also receive the retransmitted uplink information from other entities.

The method involved in the embodiments of the present disclosure may include at least one of steps S4101 to S4104. For example, steps S4103 to S4104 may be implemented as an independent embodiment, steps S4102 to S4104 may be implemented as an independent embodiment, and steps S4101 and S4103 to S4104 may be implemented as an independent embodiment, but are not limited thereto.

In some embodiments, at least one of steps S4101 and S4102 is optional, and one or more steps of these steps may be omitted or substituted in different embodiments.

In some embodiments, other example implementations described before or after the specification corresponding to Fig. 4a may be referred to.

Fig. 4b is a flowchart illustrating a method for retransmitting uplink information shown according to an embodiment of the present disclosure. As shown in Fig. 4b, an embodiment of the present disclosure relates to a method for retransmitting uplink information, which is performed by the network device 102. The method includes steps S4201, S4202, and S4203.

**Step S4201:** acquiring capability information.

For example, example implementations of step S4101 may refer to step S2101 in Fig. 2, step S4101 in Fig. 4a, and other related parts of the embodiments involved in Figs. 2 and 4a, and will not be repeated here.

**Step S4202:** sending DCI.

For example, example implementations of step S4202 may refer to step S2103 in Fig. 2, step S4103 in Fig. 4a, and other related parts of the embodiments involved in Figs. 2 and 4a, and will not be repeated here.

**Step S4203:** the network device 102 acquires the uplink information retransmitted via the first PUCCH.

For example, example implementations of step S4203 may refer to step S2104 in Fig. 2, step S4104 in Fig. 4a, and other related parts of the embodiments involved in Figs. 2 and 4a, which will not be repeated here.

In some embodiments, other example implementations described before or after the specification corresponding to Fig. 4b may be referred to.

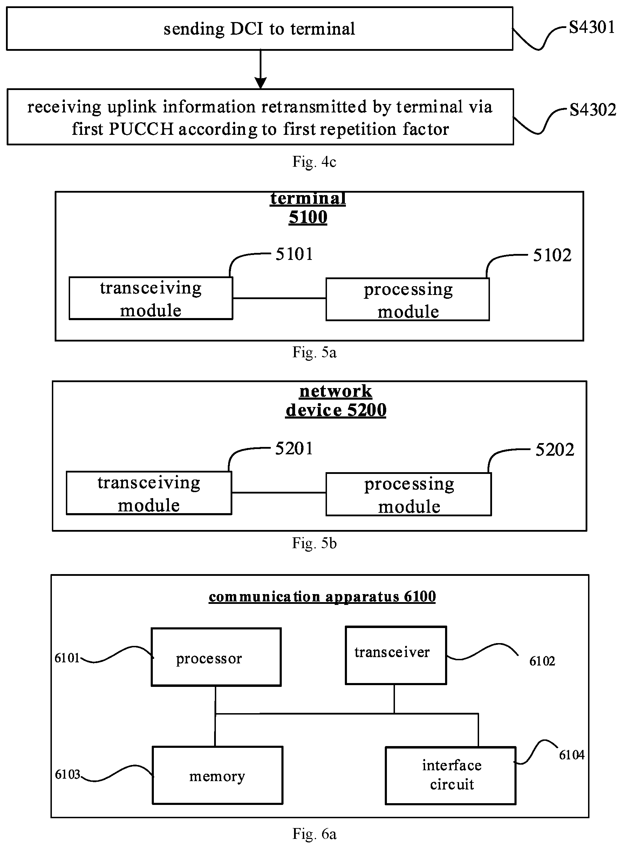

Fig. 4c is a flowchart illustrating a method for retransmitting uplink information shown according to an embodiment of the present disclosure. As shown in Fig. 4c, an embodiment of the present disclosure relates to a method for retransmitting uplink information, which is performed by the network device 102. The method includes steps 4301 and S4302.

**Step S4301:** sending DCI to the terminal 101.

For example, example implementations of step S4301 may refer to step S2103 in Fig. 2, S4103 in Fig. 4a, and other related parts of the embodiments involved in Figs. 2 and 4a, which will not be repeated here.

In some embodiments, DCI is used to indicate the first repetition factor for retransmitting the uplink information.

In some embodiments, the DCI is a DCI used for scheduling Msg4, or a DCI used for scheduling the Physical Downlink Shared Channel (PDSCH) corresponding to the first PUCCH.

For example, the first repetition factor and the second repetition factor may be the same or different, and the second repetition factor is the repetition factor of Msg4 HARQ-ACK.

In some embodiments, the DCI includes a Downlink Assignment Index (DAI) information field, which indicates the first repetition factor.

In some embodiments, the first repetition factor is one of a plurality of candidate repetition factors.

For example, some or all of the plurality of candidate repetition factors are defined by the protocol.

For example, the method may further include: sending, by the network device, second configuration information to the terminal, where the second configuration information includes a plurality of candidate repetition factors.

For example, the second configuration information is sent via a Radio Resource Control (RRC) message.

For example, before step S3301, the method may further include: receiving, by the network device, capability information sent by the terminal, where the capability information indicates whether the terminal supports the capability to retransmit information via the first PUCCH, and/or whether the terminal supports the capability to retransmit Msg4 HARQ-ACK.

**Step S4302:** the network device 102 receives the uplink information retransmitted by the terminal 101 via the first PUCCH according to the first repetition factor.

For example, example implementations of step S4302 may refer to step S2104 in Fig. 2, step S4104 in Fig. 4a, and other related parts of the embodiments involved in Figs. 2 and 4a, which will not be repeated here.

In some embodiments, other example implementations described before or after the specification corresponding to Fig. 4c may be referred to.

The method for retransmitting uplink information provided in the embodiments of the present disclosure illustrates whether the repetition factor of Msg4 HARQ-ACK can be applied to the first PUCCH, and how the repetition factor of the first PUCCH should be configured. This involves whether the retransmission of the first PUCCH can be decoupled from msg4 HARQ-ACK, or the relationship of the repetition factor of the first PUCCH with relative to the DAI indication and RRC configuration. Some examples are given below.

### Example 1:

UE reports the retransmission capability for PUCCH x and Msg 4 HARQ-ACK respectively.

For example, PUCCH x corresponds to the first PUCCH in the aforementioned embodiment(s).

For example, the retransmission capability corresponds to the first capability and/or the second capability in the aforementioned embodiment(s).

### Example 2:

PUCCH x and msg4 HARQ-ACK may have the same or different repetition factors.

### Example 3:

The DAI indication may be based on the RRC configuration, or not based on the RRC configuration, or partially based on the RRC configuration.

This example illustrates the following specific implementation.

**Method 1:** the base station configures a repetition factor of {8} via SIB (RRC). For a UE with PUCCH x and msg4 HARQ-ACK retransmission capabilities, its behavior is as follows.

For msg4 HARQ-ACK, the repetition factor is 8. That is, the base station configures this repetition factor, without considering the value indicated by the DAI in the DCI that schedules msg4.

For PUCCH x, one option is: the repetition factor is the value indicated by the DAI in the DCI that schedules msg4; another option is: the repetition factor is the value indicated by the DAI in the DCI that schedules this PDSCH.

When the DAI indicates the repetition factor, one option is: the value indicated by the DAI is a predefined value, with 2 bits corresponding to {1, 2, 4, 8} respectively; another option is: the value indicated by the DAI is a predefined value plus the value configured by RRC. In this example, 1 bit indicates 1 or 8, or 2 bits correspond to {1, 8} respectively.

The implementation of Method 1 may be seen in the following more specific instances.

Instance 1: the base station configures a repetition factor of {8} via SIB (RRC). For a UE with PUCCH x and msg4 HARQ-ACK retransmission capabilities, its behavior is as follows.

For msg4 HARQ-ACK, the repetition factor of msg4 HARQ-ACK is 8.

For PUCCH x, the repetition factor is the value indicated by the DAI in the DCI that schedules msg4, where the candidate value indicated by the DAI is a predefined value, with 2 bits corresponding to {1, 2, 3, 4} respectively. Assuming that the DAI in the PDCCH that schedules Msg4 indicates 01 (binary), then the repetition factor of PUCCH x is 2. For example, the candidate value corresponds to the candidate repetition factor in the aforementioned embodiment(s). For example, the predefinition corresponds to the protocol definition in the aforementioned embodiment(s).

Instance 2: the base station configures a repetition factor of {8} via SIB (RRC). For a UE with PUCCH x and msg4 HARQ-ACK retransmission capabilities, its behavior is as follows.

For msg4 HARQ-ACK, the repetition factor of msg4 HARQ-ACK is 8.

For PUCCH x, the repetition factor is the value indicated by the DAI in the DCI that schedules the PDSCH corresponding to PUCCH x. The candidate value indicated by the DAI is a predefined value combined with a value configured by the RRC. The predefined value is 1. Then, the candidate value is {1, 8}. Assuming that the DAI of the DCI that schedules the PDSCH corresponding to PUCCH x indicates 01 (binary), then the repetition factor of PUCCH x is 8. For example, the configuration by the RRC corresponds to the configuration by the network device in the aforementioned embodiment(s), such as the configuration via the second configuration information.

**Method** 2: the base station configures two repetition factors of {2, 8} via SIB (RRC). For a UE with PUCCH x and msg4 HARQ-ACK retransmission capabilities, its behavior is as follows.

For msg4 HARQ-ACK, the DAI in the PDCCH scheduling Msg4 indicates 01 (LSB, binary), and then the repetition factor of msg4 HARQ-ACK is 8.

For PUCCH x, one option is: the repetition factor is the value indicated by the DAI in the DCI scheduling msg4; another option is: the repetition factor is the value indicated by the DAI in the DCI scheduling this PDSCH.

When the DAI indicates the repetition factor, one option is: the value indicated by the DAI is a predefined value, with 2 bits corresponding to {1, 2, 4, 8} respectively; another option is: the value indicated by the DAI is a predefined value combined with a value configured by RRC.

The implementation of Method 2 may be seen in the following more specific instances.

Instance 1: the base station configures two repetition factors of {2, 8} via SIB (RRC). For a UE with PUCCH x and msg4 HARQ-ACK retransmission capabilities, its behavior is as follows.

For msg4 HARQ-ACK, the DAI in the PDCCH scheduling Msg4 indicates 01 (LSB, binary), and then the repetition factor for msg4 HARQ-ACK is 8.

For PUCCH x, the repetition factor is the value indicated by the DAI in the DCI scheduling msg4. The candidate value indicated by the DAI is a predefined value, with 2 bits corresponding to {1, 2, 4, 8} respectively. Since the DAI in the PDCCH scheduling Msg4 indicates 01 (binary), the repetition factor for PUCCH x is 2.

Instance 2: the base station configures two repetition factors of {2, 8} via SIB (RRC). For a UE with retransmission capabilities for PUCCH x and msg4 HARQ-ACK, its behavior is as follows.

For msg4 HARQ-ACK, the DAI in the PDCCH scheduling Msg4 indicates 01 (LSB, binary), and then the repetition factor for msg4 HARQ-ACK is 8.

For PUCCH x, the repetition factor is the value indicated by the DAI in the DCI that schedules the PDSCH corresponding to PUCCH x. The candidate value indicated by the DAI is a predefined value combined with the value configured by RRC. The predefined value is 1. Then, the candidate value is {1, 2, 8}. Assuming that the DAI in the DCI that schedules the PDSCH corresponding to PUCCH x indicates 01 (binary), then the repetition factor for PUCCH x is 2.

### Example 4:

PUCCH x refers to the PUCCH, other than Msg4 HARQ-ACK, before the dedicated PUCCH configuration.

The embodiments of the present disclosure also propose an apparatus for implementing any of the above methods. For example, an apparatus is proposed that includes units or modules for implementing the steps performed by the terminal in any of the above methods. As another example, another apparatus is proposed that includes units or modules for implementing the steps performed by the network device (e.g., access network device, core network functional node, core network device, etc.) in any of the above methods.

It should be understood that the division of units or modules in the above apparatus is only a logical functional division. In actual implementations, they may be fully or partially integrated into a single physical entity, or they may be physically separated. Furthermore, the units or modules in the apparatus may be implemented in the form of processor calling software. For example, the apparatus includes a processor connected to a memory, the memory storing instructions, and the processor calling the instructions stored in the memory to implement any of the above methods or to implement the functions of the units or modules of the above apparatus. The processor is, for example, a general-purpose processor, such as a Central Processing Unit (CPU) or a microprocessor. The memory is either internal to the apparatus or external to the apparatus. Alternatively, the units or modules in the apparatus may be implemented in the form of hardware circuits. The functionality of some or all of the units or modules may be achieved through the design of the hardware circuits, which may be understood as one or more processors. For example, in one implementation, the hardware circuit is an application-specific integrated circuit (ASIC). The functionality of some or all of the units or modules is achieved through the design of the logical relationships between the components within the circuit. As another example, in another implementation, the hardware circuit may be implemented using a programmable logic device (PLD). Taking a field programmable gate array (FPGA) as an example, it may include a large number of logic gates. The connection relationships between the logic gates are configured through configuration files, thereby achieving the functionality of some or all of the units or modules. All the units or modules of the above apparatus may be implemented entirely in the way of processor calling software, entirely through the form of hardware circuits, or partially in the way of processor calling software with the remaining parts implemented through the form of hardware circuits.

In the embodiments of the present disclosure, the processor is a circuit with signal processing capabilities. In one implementation, the processor may be a circuit with instruction read and execute capabilities, such as a Central Processing Unit (CPU), a microprocessor, a graphics processing unit (GPU) (which may be understood as a microprocessor), or a digital signal processor (DSP), etc. In another implementation, the processor may implement certain functions through the logical relationships of hardware circuits. The logical relationships of the aforementioned hardware circuits are fixed or reconfigurable. For example, the processor is a hardware circuit implemented using an application-specific integrated circuit (ASIC) or a programmable logic device (PLD), such as FPGA. In a reconfigurable hardware circuit, the process of the processor loading a configuration document and configuring the hardware circuit may be understood as the process of the processor loading instructions to implement the functions of some or all of the above units or modules. Furthermore, it may also be a hardware circuit designed for artificial intelligence, which may be understood as an ASIC, such as a Neural Network Processing Unit (NPU), a Tensor Processing Unit (TPU), or a Deep Learning Processing Unit (DPU), etc.

Fig. 5a is a schematic structural diagram of the terminal proposed in an embodiment of the present disclosure. As shown in Fig. 5a, the terminal 5100 may include at least one of a transceiving module 5101, a processing module 5102, etc. In some embodiments, the transceiving module 5101 is configured to receive downlink control information (DCI) sent by a network device. The DCI is used to indicate a first repetition factor for retransmitting uplink information. The transceiving module 5101 is further configured to retransmit the uplink information to the network device via a first physical uplink control channel (PUCCH) according to the first repetition factor. The first PUCCH includes a common PUCCH with a time-domain position prior to the time at which the terminal receives the first configuration information, other than the PUCCH occupied by hybrid automatic repeat request acknowledgment feedback information corresponding to Message 4 (Msg4 HARQ-ACK) during random access, where the first configuration information includes the dedicated PUCCH resource corresponding to the terminal.

For example, the transceiving module 5101 is configured to perform at least one of the communication steps such as sending and/or receiving performed by the terminal 101 in any of the above methods, which will not be elaborated here. For example, the processing module is configured to perform at least one of the other steps performed by the terminal 101 in any of the above methods, which will not be elaborated here.

Fig. 5b is a schematic structural diagram of a network device proposed in an embodiment of the present disclosure. As shown in Fig. 5b, the network device 5200 may include at least one of: a transceiving module 5201, a processing module 5202, etc. In some embodiments, the transceiving module 5201 is configured to send DCI to the terminal, the DCI being used to indicate the first repetition factor for retransmitting uplink information. The transceiving module 5201 is also used to receive the uplink information retransmitted by the terminal via a first PUCCH according to the first repetition factor. The first PUCCH includes: a common PUCCH with the time-domain position prior to the time at which the terminal receives the first configuration information, other than the PUCCH occupied by Msg4 HARQ-ACK corresponding to Msg4 during random access. The first configuration information includes the dedicated PUCCH resource corresponding to the terminal.

For example, the transceiving module 5201 is configured to perform at least one of the communication steps, such as sending and/or receiving, performed by the network device 102 in any of the above methods, which will not be elaborated here. For example, the processing module is configured to perform at least one of the other steps performed by the network device 102 in any of the above methods, which will not be elaborated here.

In some embodiments, the transceiving module may include a sending module and/or a receiving module, and the sending module and the receiving module may be separate or integrated. For example, the transceiving module may be interchangeable with a transceiver.

In some embodiments, the processing module may be a single module or may include multiple sub-modules. For example, the multiple sub-modules respectively perform all or some of the steps required for execution by the processing module. For example, the processing module may be interchangeable with a processor.

Fig. 6a is a schematic structural diagram of the communication apparatus 6100 proposed in an embodiment of the present disclosure. The communication apparatus 6100 may be a network device (e.g., access network device, core network device, etc.), a terminal (e.g., user equipment, etc.), or may be a chip, chip system, or processor that supports the network device in implementing any of the above methods, or may be a chip, chip system, or processor that supports the terminal in implementing any of the above methods. The communication apparatus 6100 may be used to implement the methods described in the above method embodiments. For details, references may be made to the descriptions in the above method embodiments.

As shown in Fig. 6a, the communication apparatus 6100 includes one or more processors 6101. The processor 6101 may be a general-purpose processor or a dedicated processor, such as a baseband processor or a central processing unit (CPU). The baseband processor may be used to process communication protocols and communication data, and the CPU may be used to control a communication apparatus (e.g., base station, baseband chip, terminal device, terminal device chip, DU, or CU, etc.), execute programs, and process program data. For example, the communication apparatus 6100 may be used to perform any of the above methods. For example, one or more processors 6101 may be used to call instructions to cause the communication apparatus 6100 to perform any of the above methods.

In some embodiments, the communication apparatus 6100 further includes one or more transceivers 6102. When the communication apparatus 6100 includes one or more transceivers 6102, the transceivers 6102 perform at least one of the communication steps such as sending and/or receiving in the above-described method(s), and the processor 6101 performs at least one of the other steps. In example embodiments, the transceivers may include receivers and/or transmitters, and the receivers and the transmitters may be separate or integrated. For example, the terms such as transceiver, transceiving unit, transceiving machine, transceiving circuit, interface circuit, interface, etc., may be used interchangeably; the terms such as transmitter, transmitting unit, transmitting machine, transmitting circuit, etc., may be used interchangeably; and the terms such as receiver, receiving unit, receiving machine, receiving circuit, etc., may be used interchangeably.

In some embodiments, the communication apparatus 6100 further includes one or more memories 6103 for storing data. For example, all or some of the memories 6103 may also be located outside the communication apparatus 6100. In example embodiments, the communication apparatus 6100 may include one or more interface circuits 6104. For example, the interface circuit 6104 is connected to the memory 6102. The interface circuit 6104 may be used to receive data from the memory 6102 or other devices, and may be used to send data to the memory 6102 or other devices. For example, the interface circuit 6104 may read data stored in the memory 6102 and send that data to the processor 6101.

The communication apparatus 6100 described in the above embodiments may be a network device or a terminal, but the scope of the communication apparatus 6100 described in the present disclosure is not limited thereto, and the structure of the communication apparatus 6100 is not limited to Fig. 6a. The communication apparatus may be a standalone device or may be part of a larger device. For example, the communication apparatus may be: (1) a standalone integrated circuit (IC), or chip, or chip system or subsystem; (2) a collection of one or more ICs, for example the collection also including storage components for storing data and programs; (3) an ASIC, such as a modem; (4) a module that may be embedded in other devices; (5) a receiver, terminal device, smart terminal device, cellular phone, wireless device, handheld device, mobile unit, vehicle-mounted device, network device, cloud device, artificial intelligence device, etc.; (6) others, etc.

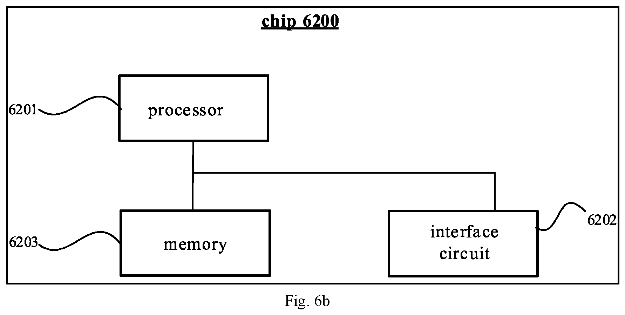

Fig. 6b is a schematic structural diagram of a chip 6200 proposed in an embodiment of the present disclosure. For cases where the communication apparatus 6100 may be a chip or chip system, reference may be made to the schematic structural diagram of the chip 6200 shown in Fig. 6b, but it is not limited thereto.

The chip 6200 includes one or more processors 6201. The chip 6200 is used to perform any of the above methods.

In some embodiments, the chip 6200 also includes one or more interface circuits 6202. For example, the terms such as interface circuit, interface, transceiving pin, etc., may be used interchangeably. In some embodiments, the chip 6200 further includes one or more memories 6203 for storing data. For example, all or some of the memories 6203 may be located outside of the chip 6200. For example, the interface circuit 6202 is connected to the memory 6203, and the interface circuit 6202 may be used to receive data from the memory 6203 or other devices, and the interface circuit 6202 may be used to send data to the memory 6203 or other devices. For example, the interface circuit 6202 may read data stored in the memory 6203 and send that data to the processor 6201.

In some embodiments, the interface circuit 6202 performs at least one of the communication steps such as sending and/or receiving in the above methods. For example, the interface circuit 6202 performing the communication steps such as sending and/or receiving in the above methods refers to: the interface circuit 6202 performing data interaction between the processor 6201, the chip 6200, the memory 6203, or the transceiving device. In some embodiments, the processor 6201 performs at least one of the other steps.

The modules and/or devices described in various embodiments, such as virtual devices, physical devices, and chips, may be arbitrarily combined or separated as appropriate. For example, some or all of the steps may be performed collaboratively by multiple modules and/or devices, and the present disclosure is not limited to this.

The present disclosure further proposes a storage medium storing instructions. When the instructions are executed on the communication apparatus 6100, the communication apparatus 6100 is caused to perform any of the above methods. For example, the storage medium is an electronic storage medium. For example, the storage medium is a computer-readable storage medium, but not limited thereto. It may also be a storage medium readable by other devices. For example, the storage medium may be a non-transitory storage medium, but not limited thereto. It may also be a temporary storage medium.

The present disclosure further proposes a program product. When the program product is executed by the communication apparatus 6100, the communication apparatus 6100 is caused to perform any of the above methods. For example, the program product is a computer program product.

The present disclosure further proposes a computer program. When the computer program is executed on a computer, the computer is caused to perform any of the above methods.

### Industrial Applicability:

In the method of the present disclosure, the terminal receives the first repetition factor indicated by the network device via DCI, so that before receiving the dedicated PUCCH resource configuration, the terminal can retransmit the first PUCCH according to the first repetition factor, thereby enhancing the coverage of the uplink information occupying the common PUCCH resource, other than Msg4 HARQ-ACK, by means of the first repetition factor.

## Claims

1. A method for retransmitting uplink information, the method comprising:
receiving, by a terminal, downlink control information (DCI) sent by a network device, wherein the DCI indicates a first repetition factor for retransmitting the uplink information; and
retransmitting, by the terminal, the uplink information to the network device via a first physical uplink control channel (PUCCH) according to the first repetition factor, wherein
the first PUCCH comprises: a common PUCCH with a time-domain position prior to a time at which the terminal receives first configuration information, other than a PUCCH occupied by hybrid automatic repeat request acknowledgment feedback information corresponding to Message 4 (Msg4 HARQ-ACK) during random access, wherein the first configuration information comprises a dedicated PUCCH resource corresponding to the terminal.

2. The method according to claim 1, wherein
the DCI is a DCI used for scheduling the Msg4, or
the DCI is a DCI used for scheduling a physical downlink shared channel (PDSCH) corresponding to the first PUCCH.

3. The method according to claim 1 or 2, wherein
the DCI comprises a downlink assignment index (DAI) information field, wherein the DAI information field indicates the first repetition factor.

4. The method according to any one of claims 1 to 3, wherein the method further comprises:
receiving, by the terminal, second configuration information sent by the network device, wherein the second configuration information comprises a plurality of candidate repetition factors.

5. The method according to claim 4, wherein
the second configuration information is sent via a radio resource control (RRC) message.

6. The method according to any one of claims 1 to 5, wherein the method further comprises:
sending, by the terminal, capability information to the network device, wherein the capability information indicates whether the terminal supports at least one of: a capability to retransmit the uplink information via the first PUCCH, or a capability to retransmit the Msg4 HARQ-ACK.

7. A method for retransmitting uplink information, the method comprising:
sending, by a network device, downlink control information (DCI) to a terminal, wherein the DCI indicates a first repetition factor for retransmitting the uplink information; and
receiving, by the network device, the uplink information retransmitted by the terminal via a first physical uplink control channel (PUCCH) according to the first repetition factor, wherein
the first PUCCH comprises: a common PUCCH with a time-domain position prior to a time at which the terminal receives first configuration information, other than a PUCCH occupied by hybrid automatic repeat request acknowledgment feedback information corresponding to Message 4 (Msg4 HARQ-ACK) during random access, wherein the first configuration information comprises a dedicated PUCCH resource corresponding to the terminal.

8. The method according to claim 7, wherein
the DCI is a DCI for scheduling the Msg4, or
the DCI is a DCI for scheduling a physical downlink shared channel (PDSCH) corresponding to the first PUCCH.

9. The method according to claim 7 or 8, wherein
the DCI comprises a downlink assignment index (DAI) information field, wherein the DAI information field indicates the first repetition factor.

10. The method according to any one of claims 7 to 9, wherein the method further comprises:
sending, by the network device, second configuration information to the terminal, wherein the second configuration information comprises a plurality of candidate repetition factors.

11. The method according to claim 10, wherein
the second configuration information is sent via a radio resource control (RRC) message.

12. The method according to any one of claims 7 to 11, wherein the method further comprises:
receiving, by the network device, capability information sent by the terminal, wherein the capability information indicates whether the terminal supports at least one of: a capability to retransmit the uplink information via the first PUCCH, or a capability to retransmit the Msg4 HARQ-ACK.

13. A terminal, comprising:
a transceiving module, configured to receive downlink control information (DCI) sent by a network device, wherein the DCI indicates a first repetition factor for retransmitting uplink information,
the transceiving module is further configured to retransmit the uplink information to the network device via a first physical uplink control channel (PUCCH) according to the first repetition factor, wherein
the first PUCCH comprises: a common PUCCH with a time-domain position prior to a time at which the terminal receives first configuration information, other than a PUCCH occupied by hybrid automatic repeat request acknowledgment feedback information corresponding to Message 4 (Msg4 HARQ-ACK) during random access, wherein the first configuration information comprises a dedicated PUCCH resource corresponding to the terminal.

14. A network device, comprising:
a transceiving module, configured to send downlink control information (DCI) to a terminal, wherein the DCI indicates a first repetition factor for retransmitting uplink information,
the transceiving module is further configured to receive the uplink information retransmitted by the terminal via a first physical uplink control channel (PUCCH) according to the first repetition factor, wherein
the first PUCCH comprises: a common PUCCH with a time-domain position prior to a time at which the terminal receives first configuration information, other than a PUCCH occupied by hybrid automatic repeat request acknowledgment feedback information corresponding to Message 4 (Msg4 HARQ-ACK) during random access, wherein the first configuration information comprises a dedicated PUCCH resource corresponding to the terminal.

15. A communication apparatus, comprising one or more processors, wherein
the communication apparatus is configured to perform the method for retransmitting uplink information according to any one of claims 1-6.

16. A communication apparatus, comprising one or more processors, wherein
the communication apparatus is configured to perform the method for retransmitting uplink information according to any one of claims 7-12.

17. A communication system, comprising a terminal and a network device, wherein
the terminal is configured to implement the method for retransmitting uplink information according to any one of claims 1-6; and
the network device is configured to implement the method for retransmitting uplink information according to any one of claims 7-12.

18. A storage medium having instructions stored thereon, wherein
when the instructions are executed on a communication device, the communication device is caused to perform the method according to any one of claims 1-6 or the method according to any one of claims 7-12.
